# EUROPEAN PATENT APPLICATION

(11) **EP 4 283 522 A1**
(43) Date of publication of application: **29.11.2023**
(21) Application number: 22778378.4
(22) Date of filing: 15.02.2022
(51) Int. Cl.: G06N 3/04

(54) **SPIKING NEURAL NETWORK CIRCUIT AND SPIKING NEURAL NETWORK-BASED CALCULATION METHOD**

(30) Priority: 02.04.2021 CN 202110363578; 28.05.2021 CN 202110588707
(71) Applicant: Huawei Technologies Co., Ltd., Shenzhen, Guangdong 518129 (CN)
(72) Inventor: ZHANG, Ziyang, Shenzhen, Guangdong 518129 (CN); LIU, Tao, Shenzhen, Guangdong 518129 (CN); WANG, Kanwen, Shenzhen, Guangdong 518129 (CN); LIAO, Jianxing, Shenzhen, Guangdong 518129 (CN)
(74) Representative: Epping - Hermann - Fischer
(86) International application number: PCT/CN2022/076269
(87) International publication number: WO 2022/206193

(57) **Abstract**

A spiking neural network circuit and a spiking neural network-based calculation method are disclosed. The circuit includes a plurality of decompression modules and a calculation module. The plurality of decompression modules are configured to separately obtain a plurality of weight values in a compressed weight matrix and identifiers of a plurality of corresponding output neurons based on information about a plurality of input neurons. Each of the plurality of decompression modules is configured to concurrently obtain weight values with a same row number in the compressed weight matrix and identifiers of a plurality of output neurons corresponding to the weight values with the same row number. Each row of the compressed weight matrix has a same quantity of non-zero weight values. Each row of weight values corresponds to one input neuron. The calculation module is configured to separately determine corresponding membrane voltages of the plurality of output neurons based on the plurality of weight values. Calculation efficiency can be improved by using the spiking neural network circuit.

## Description

This application claims priorities to Chinese Patent Application No. 202110363578.3, filed with the China National Intellectual Property Administration on April 2, 2021 and entitled "SPIKING NEURAL NETWORK COMPRESSION METHOD AND APPARATUS", and to Chinese Patent Application No. 202110588707.9, filed with the China National Intellectual Property Administration on May 28, 2021 and entitled "SPIKING NEURAL NETWORK CIRCUIT AND SPIKING NEURAL NETWORK-BASED CALCULATION METHOD", which are incorporated herein by reference in their entireties.

### TECHNICAL FIELD

This application relates to the image processing field, and more specifically, to a spiking neural network circuit and a spiking neural network-based calculation method.

### BACKGROUND

A spiking neural network (spiking neural network, SNN) is a new type of neural network and is often known as a third generation artificial neural network. The spiking neural network is closer to a real biological processing system than a conventional artificial neural network from perspectives of an information processing manner and a biological model.

In the spiking neural network, information is transmitted between neurons through a spike form. An occurrence of a spike is determined by differential equations representing various biological processing processes. Herein, a membrane voltage of a neuron is the most important. Each neuron accumulates a spike sequence of a pre-order neuron. A membrane voltage of each neuron changes with an input spike. When the membrane voltage of the neuron reaches a preset voltage value, the neuron is activated and then generates a new signal (for example, sends a spike), and transmits the signal to another neuron connected to the neuron. A related spiking neural network circuit has low efficiency of calculating the membrane voltage of the neuron.

### SUMMARY

This application provides a spiking neural network circuit and a spiking neural network-based calculation method. Calculation efficiency can be improved by using the spiking neural network circuit.

According to a first aspect, a spiking neural network circuit is provided. The circuit includes a plurality of decompression modules and a calculation module. The plurality of decompression modules are configured to separately obtain a plurality of weight values in a compressed weight matrix and identifiers of a plurality of corresponding output neurons based on information about a plurality of input neurons. Each of the plurality of decompression modules is configured to concurrently obtain weight values with a same row number in the compressed weight matrix and identifiers of a plurality of output neurons corresponding to the weight values with the same row number. Each row of the compressed weight matrix has a same quantity of non-zero weight values. Each row of weight values corresponds to one input neuron. The calculation module is configured to separately determine corresponding membrane voltages of the plurality of output neurons based on the plurality of weight values.

In the foregoing technical solution, because each row of the compressed weight matrix has the same quantity of non-zero weight values, each of the plurality of decompression modules in the spiking neural network circuit is configured to concurrently obtain the weight values with the same row number in the compressed weight matrix and the identifiers of the plurality of output neurons corresponding to the weight values with the same row number. In this way, the plurality of decompression modules simultaneously perform decompression, to increase a computing speed of a spiking neural network chip, improve calculation efficiency, and reduce a delay and power consumption.

With reference to the first aspect, in some implementations of the first aspect, the input neurons in the spiking neural network circuit include a first input neuron and a second input neuron. The plurality of decompression modules include a first decompression module and a second decompression module. The first decompression module is configured to obtain a first row of weight values corresponding to the first input neuron in the compressed weight matrix and identifiers of one or more output neurons respectively corresponding to the first row of weight values. The second decompression module is configured to obtain a second row of weight values corresponding to the second input neuron in the compressed weight matrix and identifiers of one or more output neurons respectively corresponding to the second row of weight values.

With reference to the first aspect, in some implementations of the first aspect, the first decompression module is specifically configured to: obtain, from first storage space, a base address for storing the first row of weight values, where the first storage space stores a base address of each row of weight values in the compressed weight matrix and the quantity of non-zero weight values in each row; and obtaining, from second storage space based on the base address of the first row of weight values, the first row of weight values and identifiers of output neurons respectively corresponding to the first row of weight values, where the second storage space stores the first row of weight values and the identifiers of the output neurons corresponding to the first row of weight values.

With reference to the first aspect, in some implementations of the first aspect, the spiking neural network circuit further includes: a compression module, configured to prune some weight values in an initial weight matrix according to a pruning ratio, to obtain the compressed weight matrix.

With reference to the first aspect, in some implementations of the first aspect, the compressed weight matrix includes a plurality of weight groups, and each row of each of the plurality of weight groups has a same quantity of non-zero weight values.

With reference to the first aspect, in some implementations of the first aspect, the calculation module includes a plurality of calculation submodules. Each of the plurality of calculation submodules is configured to concurrently calculate a membrane voltage of an output neuron of one weight group.

In the foregoing technical solution, because each row of each of the plurality of weight groups in the compressed weight matrix has the same quantity of non-zero weight values, the plurality of calculation submodules may be used, and each calculation submodule is configured to concurrently calculate the membrane voltage of the output neuron of one weight group. In this way, the plurality of calculation submodules simultaneously perform parallel calculation, to increase a computing speed of a spiking neural network chip, improve calculation efficiency, and reduce a delay and power consumption.

With reference to the first aspect, in some implementations of the first aspect, the plurality of calculation submodules include a first calculation submodule and a second calculation sub module, the first calculation submodule includes a first accumulation engine and a first calculation engine, and the second calculation submodule includes a second accumulation engine and a second calculation engine. The first accumulation engine is configured to determine a weight-accumulated value corresponding to an output neuron of a first weight group corresponding to the first calculation submodule. The first calculation engine is configured to determine a membrane voltage of the output neuron of the first weight group at a current moment based on the weight-accumulated value output by the first accumulation engine. The second accumulation engine is configured to determine a weight-accumulated value corresponding to an output neuron of a second weight group corresponding to the second calculation submodule. The second calculation engine is configured to determine a membrane voltage of the output neuron of the second weight group at a current moment based on the weight-accumulated value output by the second accumulation engine.

According to a second aspect, a spiking neural network-based calculation method is provided, including: separately obtaining a plurality of weight values in a compressed weight matrix and identifiers of a plurality of corresponding output neurons based on information about a plurality of input neurons, where the plurality of weight values include weight values that have a same row number in the compressed weight matrix and that are concurrently obtained, the identifiers of the plurality of output neurons include identifiers that are of a plurality of output neurons corresponding to the weight values with the same row number and that are concurrently obtained, each row of the compressed weight matrix has a same quantity of non-zero weight values, and each row of weight values corresponds to one input neuron; and separately determining corresponding membrane voltages of the plurality of output neurons based on the plurality of weight values.

With reference to the second aspect, in some implementations of the second aspect, the input neurons in the spiking neural network circuit include a first input neuron and a second input neuron. A first row of weight values corresponding to the first input neuron in the compressed weight matrix and identifiers of one or more output neurons respectively corresponding to the first row of weight values are obtained. A second row of weight values corresponding to the second input neuron in the compressed weight matrix and identifiers of one or more output neurons respectively corresponding to the second row of weight values are obtained.

With reference to the second aspect, in some implementations of the second aspect, before the separately obtaining a plurality of weight values in a compressed weight matrix and identifiers of a plurality of corresponding output neurons, the method further includes: pruning some weight values in an initial weight matrix according to a pruning ratio, to obtain the compressed weight matrix.

With reference to the second aspect, in some implementations of the second aspect, the compressed weight matrix includes a plurality of weight groups, and each row of each of the plurality of weight groups has a same quantity of non-zero weight values.

With reference to the second aspect, in some implementations of the second aspect, the corresponding membrane voltages of the plurality of output neurons are separately determined concurrently based on the plurality of weight values in each weight group.

With reference to the second aspect, in some implementations of the second aspect, the plurality of weight groups include a first weight group and a second weight group. A weight-accumulated value corresponding to an output neuron of the first weight group is determined. A membrane voltage of the output neuron of the first weight group at a current moment is determined based on the weight-accumulated value corresponding to the output neuron of the first weight group. A weight-accumulated value corresponding to an output neuron of the second weight group is determined. A membrane voltage of the output neuron of the second weight group at a current moment is determined based on the weight-accumulated value corresponding to the output neuron of the second weight group.

Advantageous effect of any one of the second aspect and the possible implementations of the second aspect corresponds to advantageous effect of any one of the first aspect and the possible implementations of the first aspect. Details are not described herein again.

According to a third aspect, a spiking neural network system is provided. The spiking neural network system includes a memory and the neural network circuit according to any one of the first aspect and the possible implementations of the first aspect. The memory is configured to store a plurality of compressed weight values.

With reference to the third aspect, in some implementations of the third aspect, the memory is further configured to store information about a plurality of input neurons.

According to a fourth aspect, a spiking neural network system is provided, including a processor and the neural network circuit according to any one of the first aspect and the possible implementations of the first aspect. The processor includes an input cache. The input cache is configured to cache information about a plurality of input neurons.

With reference to the fourth aspect, in some implementations of the fourth aspect, the system further includes a memory. The memory is configured to store a plurality of compressed weight values.

According to a fifth aspect, an apparatus for determining a membrane voltage of a spiking neuron is provided, including a communication interface and a processor. The processor is configured to control the communication interface to receive and send information. The processor is connected to the communication interface, and is configured to perform the method for determining a membrane voltage of a spiking neuron according to the second aspect or any possible implementation of the second aspect.

Optionally, the processor may be a general-purpose processor, and may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a sixth aspect, a computer program product is provided. The computer program product includes computer program code. When the computer program code is run on a computing device, the computing device is enabled to perform the method according to the second aspect or any possible implementation of the second aspect.

According to a seventh aspect, a computer-readable medium is provided. The computer-readable medium stores program code. When the computer program code is run on a computing device, the computing device is enabled to perform the method according to the second aspect or any possible implementation of the second aspect. The computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

### BRIEF DESCRIPTION OF DRAWINGS

FIG. 1 is a schematic diagram of a structure of a spiking neural network;
FIG. 2 is a schematic flowchart of a weight compression method of a spiking neural network according to an embodiment of this application;
FIG. 3 is a schematic diagram of an initial weight matrix of a spiking neural network according to an embodiment of this application;
FIG. 4 is a schematic diagram of performing semi-structured pruning on an initial weight matrix of a spiking neural network according to an embodiment of this application;
FIG. 5 is a schematic diagram of a structure of a spiking neural network obtained after semi-structured pruning according to an embodiment of this application;
FIG. 6 is a schematic diagram of performing grouped semi-structured pruning on an initial weight matrix of a spiking neural network according to an embodiment of this application;
FIG. 7 is a schematic diagram of a structure of a spiking neural network obtained after group semi-structured pruning according to an embodiment of this application;
FIG. 8 is a schematic diagram of an architecture of a spiking neural network circuit according to an embodiment of this application;
FIG. 9 is a schematic block diagram of associated compressed weight storage space 240 according to an embodiment of this application;
FIG. 10 is a schematic block diagram in which a decompression engine obtains a weight value and a corresponding output neuron according to an embodiment of this application;
FIG. 11 is a schematic block diagram in which an accumulation engine obtains a weight-accumulated value of an output neuron according to an embodiment of this application;
FIG. 12 is a schematic block diagram in which a calculation engine determines a membrane voltage of a spiking neuron according to an embodiment of this application;
FIG. 13 is a schematic flowchart of a method for calculating a membrane voltage of a spiking neuron according to an embodiment of this application;
FIG. 14 is a schematic diagram of another architecture of a spiking neural network circuit according to an embodiment of this application; and
FIG. 15 is a schematic block diagram of a spiking neural network system 1500 according to an embodiment of this application.

### DESCRIPTION OF EMBODIMENTS

The following describes the technical solutions of this application with reference to the accompanying drawings.

Artificial intelligence (artificial intelligence, AI) is a theory, a method, a technology, and an application system that simulates, extends, and expands human intelligence by using a digital computer or a machine controlled by a digital computer, to sense an environment, obtain knowledge, and obtain an optimal result by using the knowledge. In other words, the artificial intelligence is a branch of computer science, and is intended to understand essence of intelligence and produce a new intelligent machine that can react in a manner similar to the human intelligence. The artificial intelligence is intended to study design principles and implementation methods of various intelligent machines, so that the machines have sensing, inference, and decision-making functions. Researches in the artificial intelligence field include robotics, natural language processing, computer vision, decision-making and inference, manmachine interaction, recommendation and search, an AI basic theory, and the like.

In the AI field, a neural network (neural network, NN) is a mathematical model or a calculation model that simulates a structure and a function of a biological neural network (an animal central nervous system, especially a brain), and is used to estimate or approximate a function. The biological brain is composed of a large quantity of neurons that are connected in different manners. A previous neuron and a current neuron are connected through a synaptic structure for information transmission. A spiking neural network (spiking neural network, SNN) is a new type of neural network and is often known as a third generation artificial neural network. The spiking neural network is closer to a real biological processing system than a conventional artificial neural network from perspectives of an information processing manner and a biological model. Specifically, the artificial neural network transmits a multivalue signal, and the spiking neural network transmits binary spike information. Therefore, input and output information of the spiking neural network is sparse, and the spiking neural network has a low power consumption feature. In addition, a neuron model of the spiking neural network is similar to a brain neuron model, and the spiking neural network has a kinetics accumulation process and has time dimension information more than the conventional artificial neural network. Therefore, the spiking neural network is more suitable for processing an intelligent task with time information.

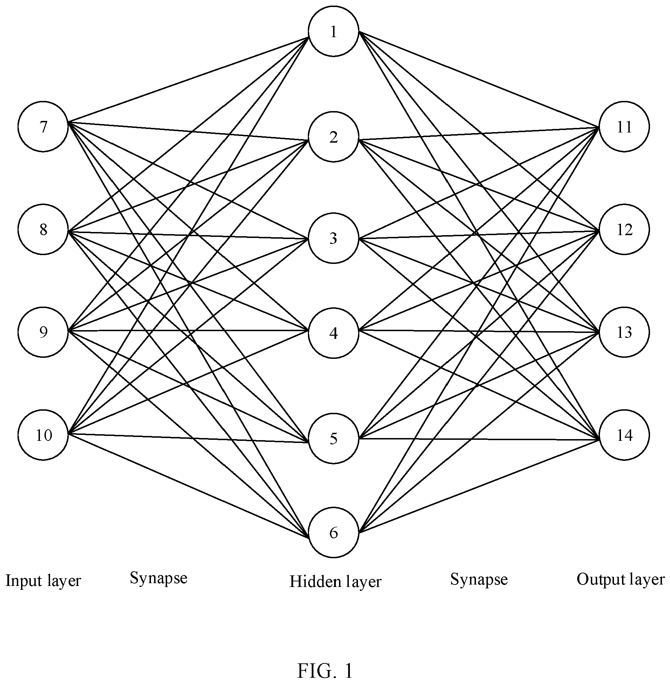

FIG. 1 is a schematic diagram of a structure of a spiking neural network. With reference to FIG. 1, the spiking neural network may include three layers: an input layer, a hidden layer, and an output layer. The hidden layer includes a plurality of layers. Logic is in parallel at a layer, and logic is in series between layers. Calculation results depend on and affect each other between layers. For ease of description, an example in which the hidden layer includes one layer of neurons is used for description in FIG. 1.

With reference to FIG. 1, each layer of the spiking neural network may include a plurality of nodes. Each node is configured to simulate a spiking neuron, and is configured to perform a specific operation, for example, an activation function. A connection between a previous neuron (also referred to as an input neuron) and a current neuron (also referred to as an output neuron) is used to simulate a synapse (synapse). It should be understood that the synapse is a carrier for transmitting information between the two neurons. A weight value of the synapse represents strength of the connection between the two neurons. It should be understood that numbers of the nodes shown in FIG. 1 are merely used to identify or distinguish between different nodes.

In the spiking neural network, information is transmitted between neurons through a spike form based on discrete activities at specific time points instead of continuous activities. An occurrence of a spike is determined by differential equations representing various biological processing processes. Herein, a membrane voltage of a neuron is the most important. Each neuron accumulates a spike sequence of a pre-order neuron. A membrane voltage of each neuron changes with an input spike. When the membrane voltage of the neuron reaches a preset voltage value, the neuron is activated and then generates a new signal (for example, sends a spike), and transmits the signal to another neuron connected to the neuron. After the neuron sends the spike, the membrane voltage of the neuron is reset, and the membrane voltage of the neuron is continuously changed by accumulating the spike sequence of the pre-order neuron. The neuron in the spiking neural network implements information transmission and processing in the foregoing manner, and has information processing capabilities such as non-linearity, self-adaptation, and fault tolerance.

It should be noted that two neurons in the spiking neural network may be connected through one synapse, or may be connected through a plurality of synapses. This is not specifically limited in this application. Each synapse has a modifiable synaptic weight value (which may also be referred to as a weight). A plurality of spikes transmitted by a neuron before the synapse may generate different membrane voltages after the synapse based on different synaptic weight values.

Although the spiking neural network has features such as sparseness and low power consumption in a running process, precision of the spiking neural network is not high. To improve network precision, a quantity of weights of the spiking neural network is also large. Consequently, weight storage in a spiking neural network chip is excessively large. Therefore, an area, a delay, and power consumption of the chip are correspondingly increased, thereby limiting hardware development and commercialization of the spiking neural network. Therefore, weight compression is important for the spiking neural network.

In view of this, an embodiment of this application provides a weight compression method of a spiking neural network. According to the method, a non-zero quantity in each row or a non-zero quantity in each group in each row in a weight matrix can be the same. In this way, when a weight storage resource at a hardware layer of the spiking neural network is saved, parallel decompression and parallel calculation at the hardware layer of the spiking neural network can be further implemented, to increase a computing speed, improve calculation efficiency at the hardware layer of the spiking neural network, and reduce a delay and power consumption.

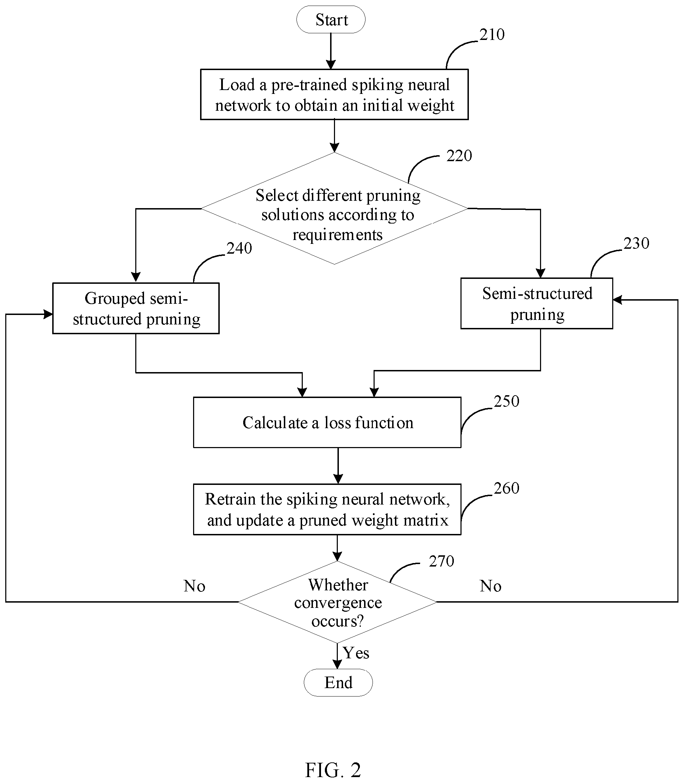

FIG. 2 is a schematic flowchart of a weight compression method of a spiking neural network according to an embodiment of this application. As shown in FIG. 2, the method may include steps 210 to 270. The following separately describes steps 210 to 270 in detail.

Step 210: Load a pre-trained spiking neural network to obtain an initial weight.

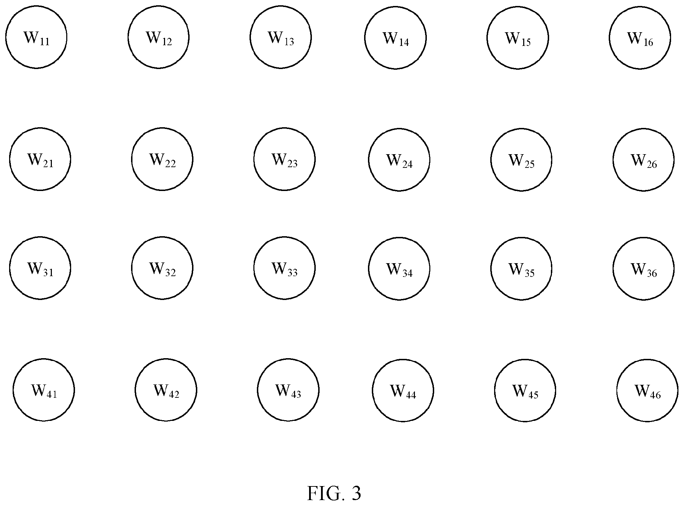

The hidden layer in the spiking neural network shown in FIG. 1 is used as an example. An initial weight matrix of the hidden layer is shown in FIG. 3. Each row of the initial weight matrix represents one input neuron, for example, a neuron at an input layer connected to the hidden layer. Each column represents one output neuron, for example, one neuron at the hidden layer.

For example, in the initial weight matrix shown in FIG. 3, weights W₁₁ to W₄₁ in a first column represent weight values corresponding to a number 1 neuron at the hidden layer in FIG. 1, weights W₁₂ to W₄₂ in a second column represent weight values corresponding to a number 2 neuron at the hidden layer in FIG. 1, weights W₁₃ to W₄₃ in a third column represent weight values corresponding to a number 3 neuron at the hidden layer in FIG. 1, weights W₁₄ to W₄₄ in a fourth column represent weight values corresponding to a number 4 neuron at the hidden layer in FIG. 1, weights W₁₅ to Was in a fifth column represent weight values corresponding to a number 5 neuron at the hidden layer in FIG. 1, and weights W₁₆ to Was in a sixth column represent weight values corresponding to a number 6 neuron at the hidden layer in FIG. 1. Weights W₁₁ to W₁₆ in a first row represent weight values corresponding to a number 7 neuron at the input layer in FIG. 1, weights W₂₁ to W₂₆ in a second row represent weight values corresponding to a number 8 neuron at the input layer in FIG. 1, weights W₃₁ to W₃₆ in a third row represent weight values corresponding to a number 9 neuron at the input layer in FIG. 1, and weights W₄₁ to Was in a fourth row represent weight values corresponding to a number 10 neuron at the input layer in FIG. 1.

Step 220: Select different weight matrix pruning solutions according to requirements.

For example, if each row of the weight matrix needs to have a same quantity of non-zero weights, semi-structured pruning in step 230 may be performed; or if the weight matrix needs to be grouped and a quantity of non-zero weights in each group in each row of the weight matrix needs to be the same, grouped semi-structured pruning in step 240 may be performed.

Step 230: Perform semi-structured pruning.

In this embodiment of this application, the semi-structured pruning is to perform weight pruning by using each row of the weight matrix as a granularity, to obtain a semi-structured pruned weight matrix. Specifically, each row of weight values in the original weight matrix may be sorted based on weight magnitudes by using each row of the weight matrix as a granularity. Then s% (sparsity) last in the order is set to 0. In this way, the semi-structured pruned weight matrix is obtained, so that each row in the semi-structured pruned weight matrix has a same length.

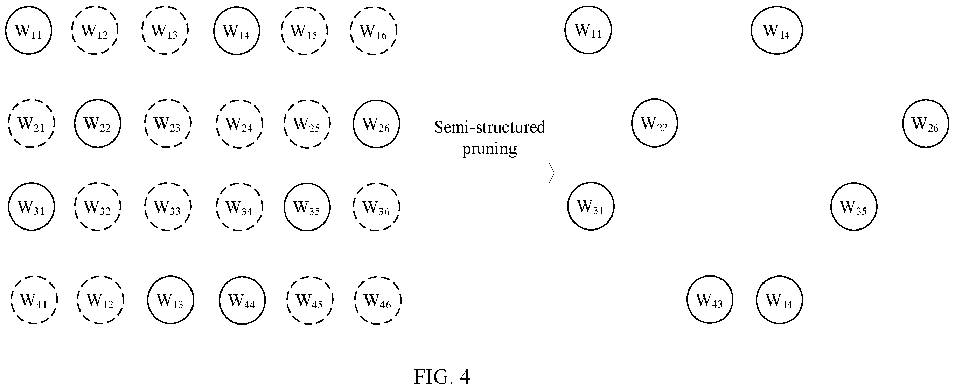

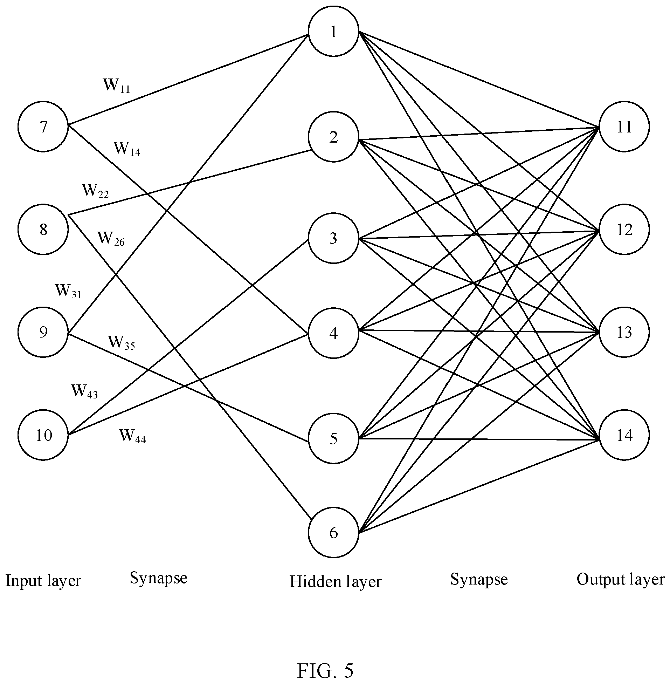

For example, a sparsity is 66.6%. Each row of weight values in the initial weight matrix shown in FIG. 3 may be sorted. Then 66.6% of weight values last in the order are set to 0. In a weight matrix shown in FIG. 4, dashed lines represent weight values removed through pruning, and a weight matrix represented by solid lines is a pruned weight matrix. In the pruned weight matrix, each row includes a same quantity of non-zero weight values (includes two weight values). For example, as shown in FIG. 4, a first row of the semi-structured pruned weight matrix includes two weights: W₁₁ and W₁₄. To be specific, in FIG. 1, the number 7 neuron at the input layer is separately connected to the number 1 neuron and the number 4 neuron at the hidden layer, and weight values of the connections are respectively W₁₁ and W₁₄. A second row includes two weights: W₂₂ and W₂₄. To be specific, in FIG. 1, the number 8 neuron at the input layer is separately connected to the number 2 neuron and the number 6 neuron at the hidden layer, and weight values of the connections are respectively W₂₂ and W₂₆. A third row includes two weights: W₃₁ and W₃₅. To be specific, in FIG. 1, the number 9 neuron at the input layer is separately connected to the number 1 neuron and the number 5 neuron at the hidden layer, and weight values of the connections are respectively W₃₁ and W₃₅. A fourth row includes two weights: W₄₃ and W₄₄. To be specific, in FIG. 1, the number 10 neuron at the input layer is separately connected to the number 3 neuron and the number 4 neuron at the hidden layer, and weight values of the connections are respectively W₄₃ and W₄₄. Specifically, a structure of a semi-structured pruned spiking neural network is shown in FIG. 5.

In other words, each row in the pruned weight matrix has a same length, and a same quantity of connections exist between each neuron at a same layer and a neuron at a following layer.

Step 240: Perform grouped semi-structured pruning.

In this embodiment of this application, grouped semi-structured pruning indicates to divide each row into several groups including a same quantity of weights, and perform weight pruning by using each group in each row of the weight matrix as a granularity, to obtain a grouped semi-structured pruned weight matrix. Specifically, weight values in each group in each row in the original weight matrix may be sorted based on weight magnitudes by using each group in each row of the weight matrix as a granularity. Then s% (sparsity) last in the order is set to 0. In this way, the grouped semi-structured pruned weight matrix is obtained, so that each group in each row in the grouped semi-structured pruned weight matrix has a same length.

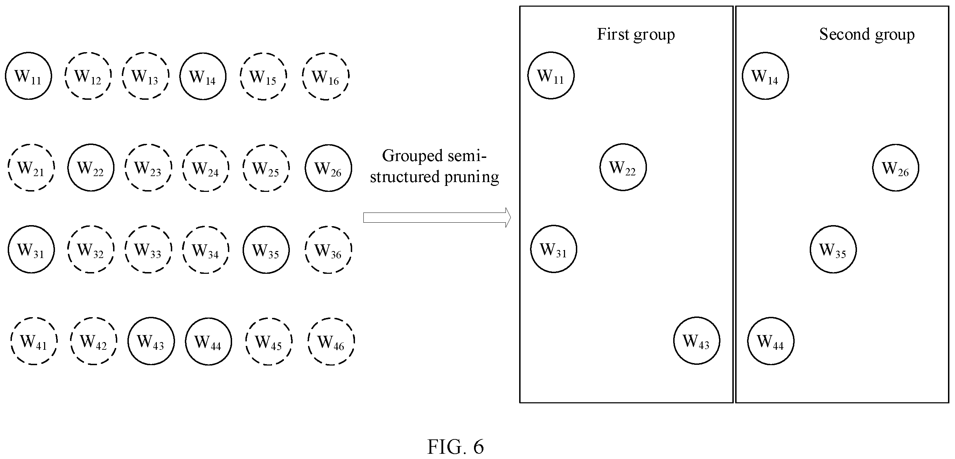

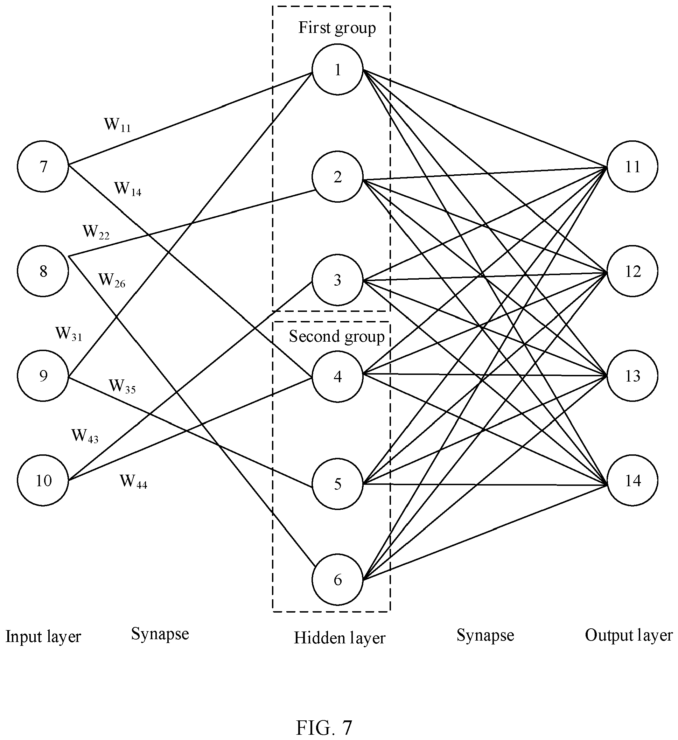

For example, a sparsity of each group is 66.6%. The neurons at the hidden layer shown in FIG. 1 may be divided into two groups, and each group includes three neurons. For example, a first group includes three neurons with neuron numbers from 1 to 3, and a second group includes three neurons with neuron numbers from 4 to 6. The weight values in each group in each row of the initial weight matrix shown in FIG. 3 may be sorted. Then 66.6% of weight values last in the order are set to 0. In a weight matrix shown in FIG. 6, dashed lines represent weight values removed through pruning, and a weight matrix represented by solid lines is a pruned weight matrix. In the pruned weight matrix, each group in each row includes a same quantity of non-zero weight values (includes one weight value). In other words, each group in each row in the pruned weight matrix has a same length. Specifically, a structure of a grouped semi-structured pruned spiking neural network is shown in FIG. 7.

Step 250: Calculate a loss function based on the weights obtained after the pruning.

It should be understood that the loss function is used to calculate an error between an actual (a target) value and a predicted value of the spiking neural network, to optimize a parameter of the spiking neural network. For example, in this embodiment, the loss function of the spiking neural network may be calculated based on the weights obtained after the pruning, to obtain the error between the actual (target) value and the predicted value of the spiking neural network, thereby optimizing or updating the pruned weight matrix based on the error.

Step 260: Retrain the spiking neural network, and update the pruned weight matrix.

For example, the parameter (weight) of the spiking neural network may be optimized based on the foregoing loss function, to reduce a loss of the spiking neural network to the greatest extent. For example, a gradient descent method may be used to optimize the parameter (weight) of the spiking neural network, update the pruned weight matrix, and minimize the loss of the neural network.

Step 270: Determine whether the spiking neural network converges.

If the spiking neural network converges, the procedure ends. If the spiking neural network does not converge, step 230 or step 240 continues to be performed until the spiking neural network converges.

In the foregoing technical solution, semi-structured pruning can implement quantity consistency between rows of a weight matrix at each layer, and grouped semi-structured pruning can implement quantity consistency between groups in rows of a weight matrix at each layer. In this way, a weight storage resource is saved at a hardware layer, and parallel decompression and parallel calculation are further implemented, to increase a computing speed at the hardware layer, improve calculation efficiency, and reduce a delay and power consumption.

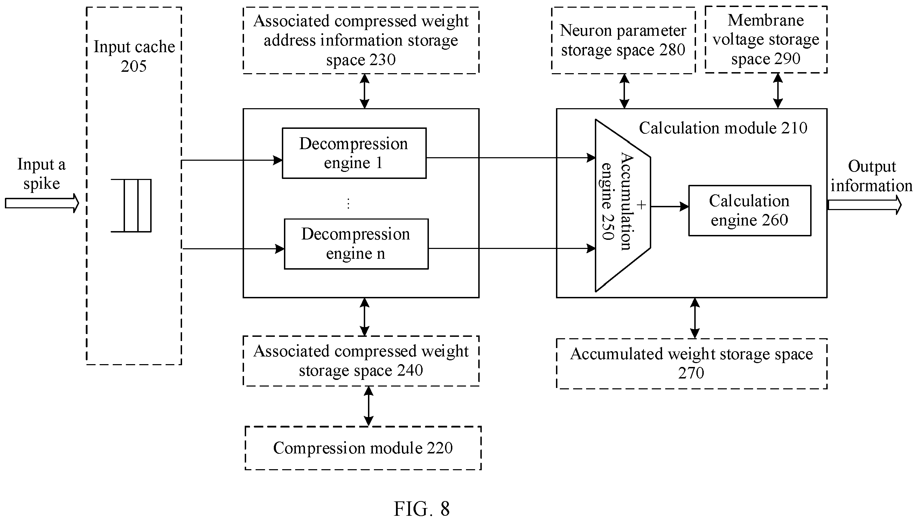

The following uses the spiking neural network shown in FIG. 1 as an example to describe in detail the hardware layer of the spiking neural network provided in embodiments of this application with reference to FIG. 8 to FIG. 12. It should be understood that the examples in FIG. 8 to FIG. 12 are merely intended to help a person skilled in the art understand embodiments of this application, instead of limiting embodiments of this application to a specific value or a specific scenario shown in the examples. A person skilled in the art can clearly make various equivalent modifications or changes based on the examples provided in FIG. 8 to FIG. 12 below, and such modifications or changes also fall within the scope of embodiments of this application.

FIG. 8 is a schematic diagram of an architecture of a spiking neural network circuit according to an embodiment of this application. As shown in FIG. 8, the spiking neural network circuit may include 1 to n decompression engines (which may also be referred to as decompression modules or decompression modules) and a calculation module 210. In the spiking neural network circuit, the calculation module 210 may include an accumulation engine 250 and a calculation engine 260. Optionally, the spiking neural network circuit further includes: an input cache 205, a compression module 220, associated compressed weight address information storage space 230, associated compressed weight storage space 240, accumulated weight storage space 270, neuron parameter storage space 280, and membrane voltage storage space 290. The following separately describes functions of the foregoing modules in detail.

The input cache 205 is configured to store information about a pre-order neuron (an input neuron) (the information may be a number or an index of the neuron) that sends an input spike. In this embodiment, the input neuron may be a neuron at the input layer shown in FIG. 1. For example, the input cache 205 may be a cache of a processor.

The compression module 220 is configured to perform the method shown in FIG. 2, to obtain a pruned weight matrix. The pruned weight matrix includes a weight obtained after the pruning and a number of an output neuron corresponding to the weight. The weight obtained after the pruning and the number of the output neuron corresponding to the weight may be further stored in the associated compressed weight storage space 240.

The associated compressed weight storage space 240 is configured to store the weight obtained after the pruning and the number of the output neuron corresponding to the weight. In this embodiment, the output neuron may be a neuron at the hidden layer shown in FIG. 1. For example, the pruned weight obtained after the semi-structured pruning in FIG. 4 may be associated with the number of the corresponding output neuron according to a specific correspondence, to form associated compressed weight data. The associated compressed weight data is hardened into the associated compressed weight storage space 240 of a spiking neural network chip.

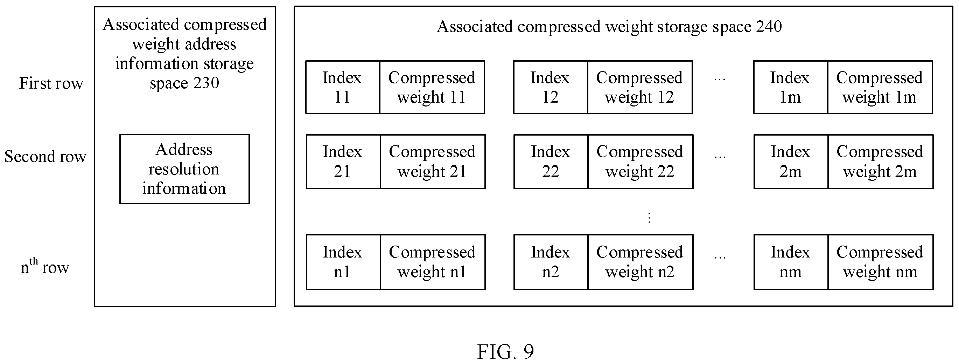

Specifically, as shown in FIG. 9, the associated compressed weight storage space 240 stores the compressed weight and the associated index. This association method may use a direct indexing method or an indirect indexing method. This is not specifically limited in this embodiment of this application. For example, the direct indexing method is to add a corresponding index before each compressed weight, and specific content of the index is the number of the neuron. For another example, the indirect indexing method is to add a corresponding index before each compressed weight, and specific content of the index is a distance between a number of a neuron of the compressed weight and a number of a neuron of a previous compressed weight.

It should be understood that FIG. 9 shows a diagram of a storage format of the associated compressed weight storage space 240 in semi-structured pruning. This diagram is only a diagram of a format of a specific layer (for example, the hidden layer) of the spiking neural network. Other layers are similar. Each row represents one input neuron, and each column represents one output neuron. It can be learned that after semi-structured sparseness, all the rows have consistent quantities of compressed weights. After the associated compressed weight is obtained, the weight matrix is hardened into the associated compressed weight storage space 240 of the chip.

For example, in FIG. 4, a weight obtained after pruning is obtained through semi-structured pruning, and specific content of an index is a number of a neuron associated with the weight. A first row of the associated compressed weight storage space 240 stores 1-W₁₁ and 4-W₁₄, a second row stores 2-W₂₂ and 6-W₂₆, a third row stores 1-W₃₁ and 5-W₃₅, and a fourth row stores 3-W₄₃ and 4-W₄₄. Herein, 1-W₁₁ stored in the first row corresponds to one associated compressed weight, and indicates a compressed weight W₁₁ and an index corresponding to the compressed weight. The index indicates that an output neuron associated with the compressed weight is a number 1 neuron. In addition, 4-W₁₄ corresponds to one associated compressed weight, and indicates a compressed weight W₁₄ and an index corresponding to the compressed weight. The index indicates that an output neuron associated with the compressed weight is a number 4 neuron.

The associated compressed weight address information storage space 230 is configured to store address resolution information of the associated compressed weight. For example, the address resolution information may be a base address of each row of associated compressed weights and a quantity of compressed weights in each row. In the semi-structured pruning solution shown in FIG. 4, because quantities of associated compressed weights in all the rows are the same, only one quantity of weights in each row needs to be stored, and a corresponding address of an associated compressed weight in the associated compressed weight storage space 240 may be calculated based on the base address of each row of associated compressed weights. In an unstructured pruning solution, a quantity of associated compressed weights in each row needs to be separately stored because quantities of associated compressed weights in all rows are different. In comparison, a weight storage resource can be saved.

It should be understood that FIG. 9 shows the diagram of the storage format of the associated compressed weight address information storage space 230 in semi-structured pruning. This diagram is only a diagram of a format of a specific layer (for example, the hidden layer) of the spiking neural network. Other layers are similar. After the address resolution information of the associated compressed weight is obtained, the address resolution information of the associated compressed weight is hardened into the associated compressed weight address information storage space 230 of the chip.

For example, a weight obtained after semi-structured pruning in FIG. 4 is used as an example. The associated compressed weight address information storage space 230 may store a base address of each row of associated compressed weights and a quantity of associated compressed weights in each row. The quantity is, for example, 2.

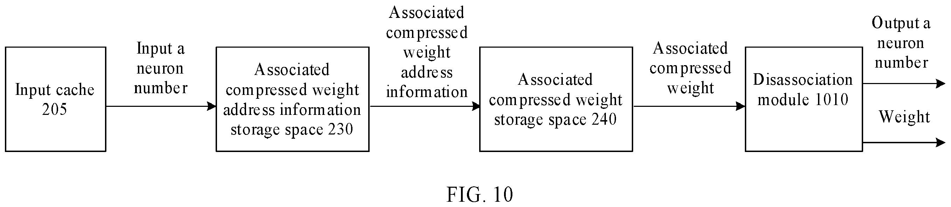

The decompression engine is configured to disassociate, based on information about a plurality of input neurons, the associated compressed weight stored in the associated compressed weight storage space 240. Specifically, with reference to FIG. 10, the decompression engine may obtain a number of an input neuron from the input cache 205, and parse out address information of an associated compressed weight from the associated compressed weight address information storage space 230 based on the number. The associated compressed weight is obtained from the associated compressed weight storage space 240 based on the address information. A disassociation module 1010 disassociates the associated compressed weight, to obtain a number and a weight of a corresponding output neuron. For example, if the index format is direct indexing, the number and the weight information of the output neuron may be directly obtained; or if the index format is indirect indexing, the number and the weight information of the output neuron may be obtained through a displacement operation.

In this embodiment of this application, the semi-structured pruning solution is used for weight compression, so that the quantities of weights in all the rows are consistent after the pruning. Herein, the 1 to n decompression engines may be used. Each decompression engine is responsible for decompressing one row of associated compressed weights in the associated compressed weight storage space 240 based on the information about the plurality of input neurons. In this way, the 1 to n decompression engines simultaneously perform decompression, to increase a computing speed of the spiking neural network chip, improve calculation efficiency, and reduce a delay and power consumption.

For example, the semi-structured pruning solution in FIG. 4 is used as an example. The spiking neural network chip may include four decompression engines. Each decompression engine is responsible for decompressing one row of associated compressed weights in the associated compressed weight storage space 240. For example, a decompression engine 1 is responsible for decompressing associated compressed weights (for example, 1-W₁₁ and 4-W₁₄) stored in a first row of the associated compressed weight storage space 240; a decompression engine 2 is responsible for decompressing associated compressed weights (for example, 2-W₂₂ and 6-W₂₆) stored in a second row of the associated compressed weight storage space 240; a decompression engine 3 is responsible for decompressing associated compressed weights (for example, 1-W₃₁ and 5-W₃₅) stored in a third row of the associated compressed weight storage space 240; and a decompression engine 4 is responsible for decompressing associated compressed weights (for example, 3-W₄₃ and 4-W₄₄) stored in a fourth row of the associated compressed weight storage space 240.

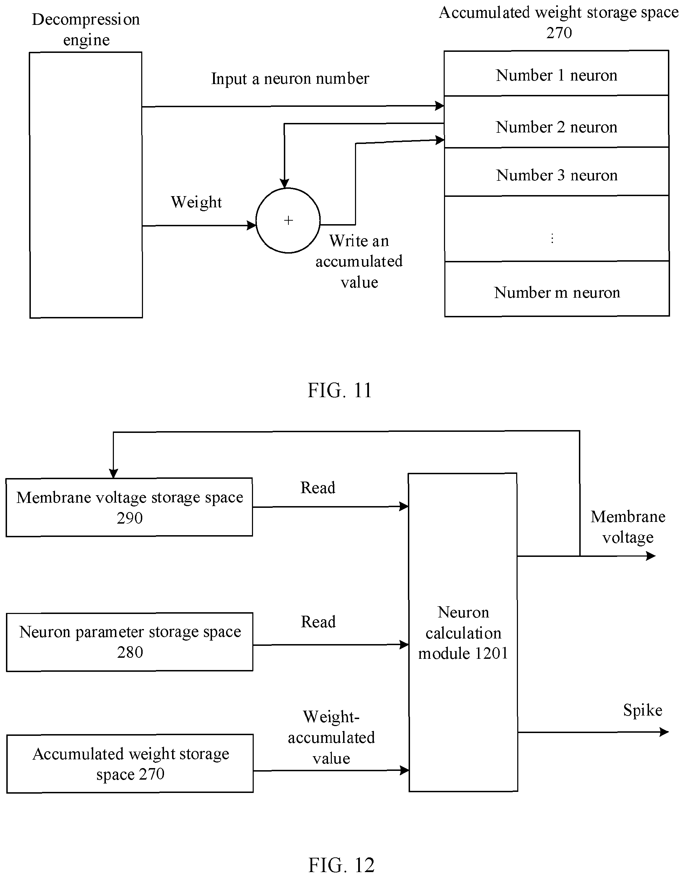

The calculation module 210, for example, may include the accumulation engine 250 and the calculation engine 260. The accumulation engine 250 is configured to perform accumulation for a weight of a corresponding output neuron. Specifically, with reference to FIG. 11, the accumulation engine 250 may read, based on a neuron number output by each of the 1 to n decompression engines, a weight-accumulated value corresponding to the neuron number in the accumulated weight storage space 270; accumulate the weight-accumulated value and a weight that corresponds to the neuron number and that is output by each of the 1 to n decompression engines; and then write an accumulated value into the accumulated weight storage space 270. The calculation engine 260 is configured to calculate a membrane voltage of an output neuron. Specifically, with reference to FIG. 12, after decompression and accumulation are completed for all neurons at a current layer, the calculation engine 260 reads a membrane voltage, a neuron parameter configuration, and a weight-accumulated value at a previous time respectively from the membrane voltage storage space 290, the neuron parameter space 280, and the accumulated weight storage space 270; and performs membrane voltage accumulation by using a neuron calculation module 1201. If the membrane voltage exceeds a threshold voltage, a spike is sent, and the membrane voltage is set to zero and written back to the membrane voltage storage space 290. If the membrane voltage does not exceed a threshold voltage, the accumulated membrane voltage is written back to the membrane voltage storage space 290.

The accumulated weight storage space 270 is configured to store a weight-accumulated value corresponding to each output neuron.

The neuron parameter space 280 is configured to store neuron parameter configuration information of the spiking neural network.

The membrane voltage storage space 290 is configured to store an accumulated membrane voltage of a neuron.

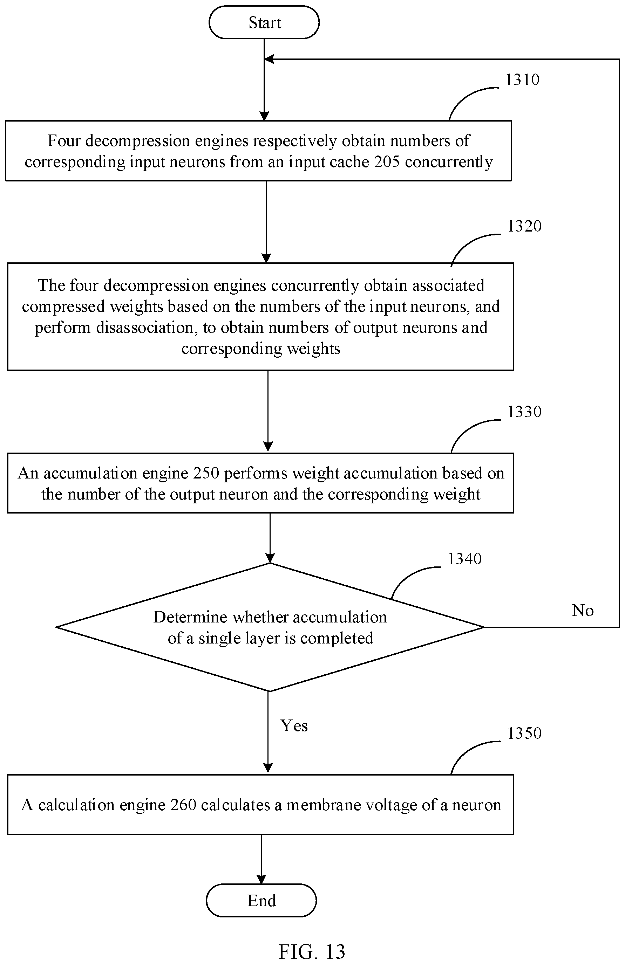

The following uses the spiking neural network circuit shown in FIG. 8 as an example to describe in detail a specific implementation process of calculating a membrane voltage of a spiking neuron in the circuit with reference to FIG. 13. It should be understood that an example in FIG. 13 is merely intended to help a person skilled in the art understand embodiments of this application, instead of limiting embodiments of this application to a specific value or a specific scenario shown in the example. A person skilled in the art can clearly make various equivalent modifications or changes based on the example provided in FIG. 13 below, and such modifications or changes also fall within the scope of embodiments of this application.

FIG. 13 is a schematic flowchart of a method for calculating a membrane voltage of a spiking neuron according to an embodiment of this application. As shown in FIG. 13, the method may include steps 1310 to 1350. The following separately describes steps 1310 to 1350 in detail.

It should be understood that, for ease of description, FIG. 13 shows an example of calculating membrane voltages of number 1 to number 6 neurons at a hidden layer. Calculation of a membrane voltage of a neuron at another layer is similar to the method shown in FIG. 13.

Step 1310: Four decompression engines respectively obtain numbers of corresponding input neurons from the input cache 205 concurrently.

For example, the numbers of the input neurons that are respectively obtained by the four decompression engines (a decompression engine 1 to a decompression engine 4) from the input cache 205 are number 7 to number 10 neurons at an input layer.

Step 1320: The four decompression engines concurrently obtain associated compressed weights based on the numbers of the input neurons, and perform disassociation, to obtain numbers of output neurons and corresponding weights.

For example, FIG. 8 may include four decompression engines (the decompression engine 1 to the decompression engine 4). Each decompression engine is responsible for disassociating a corresponding row of associated compressed weights in the associated compressed weight storage space 240. The four decompression engines (the decompression engine 1 to the decompression engine 4) can concurrently complete disassociation of the four rows of associated compressed weights in the associated compressed weight storage space 240. Specifically, each decompression engine concurrently parses out address information of the associated compressed weight in the corresponding row in the associated compressed weight address information storage space 230 based on the number of the input neuron, obtains the associated compressed weight from the associated compressed weight storage space 240 based on the address information, and disassociates the associated compressed weight, to obtain the number of the corresponding output neuron and the weight. For example, the decompression engine 1 is responsible for decompressing associated compressed weights (for example, 1-W₁₁ and 4-W₁₄) stored in a first row of the associated compressed weight storage space 240, to obtain a weight value W₁₁ corresponding to a number 1 output neuron and a weight value W₁₄ corresponding to a number 4 output neuron. For example, a decompression engine 2 is responsible for concurrently decompressing associated compressed weights (for example, 2-W₂₂ and 6-W₂₆) stored in a second row of the associated compressed weight storage space 240, to obtain a weight value W₂₂ corresponding to a number 2 output neuron and a weight value W₂₆ corresponding to a number 6 output neuron. Likewise, another decompression engine concurrently disassociates another row of associated compressed weights in the associated compressed weight storage space 240.

Step 1330: An accumulation engine 250 performs weight accumulation based on the number of the output neuron and the corresponding weight.

The accumulation engine 250 may read, based on the number of the output neuron, a weight-accumulated value corresponding to the neuron number in the accumulated weight storage space 270; accumulate the weight-accumulated value and the weight that corresponds to the neuron number and that is output by each of the four decompression engines (the decompression engine 1 to the decompression engine 4); and then write an accumulated value into the accumulated weight storage space 270.

Step 1340: Determine whether accumulation of a single layer is completed.

For example, it may be determined whether decompression and accumulation are completed for all neurons at the current layer. If decompression and accumulation are not completed for all the neurons at the current layer, step 1310 is performed again. If decompression and accumulation are completed for all the neurons at the current layer, step 1350 is further performed.

Step 1350: A calculation engine 260 calculates a membrane voltage of a neuron.

After decompression and accumulation are completed for all the neurons at the current layer, the calculation engine 260 reads a membrane voltage, a neuron parameter configuration, and a weight-accumulated value at a previous time respectively from membrane voltage storage space 290, neuron parameter space 280, and the accumulated weight storage space 270; and performs membrane voltage accumulation by using a neuron calculation module 1201. If the membrane voltage exceeds a threshold voltage, a spike is sent, and the membrane voltage is set to zero and written back to the membrane voltage storage space 290. If the membrane voltage does not exceed a threshold voltage, the accumulated membrane voltage is written back to the membrane voltage storage space 290.

In the foregoing technical solution, the semi-structured pruning solution is used in this embodiment of this application, so that quantities of weights in all rows are consistent. Herein a plurality of decompression engines may be used for concurrent disassociation. Each decompression engine is responsible for decompressing one row of associated compressed weights in the associated compressed weight storage space 240. In this way, the plurality of decompression engines simultaneously perform decompression, to increase a computing speed of a spiking neural network chip, improve calculation efficiency, and reduce a delay and power consumption.

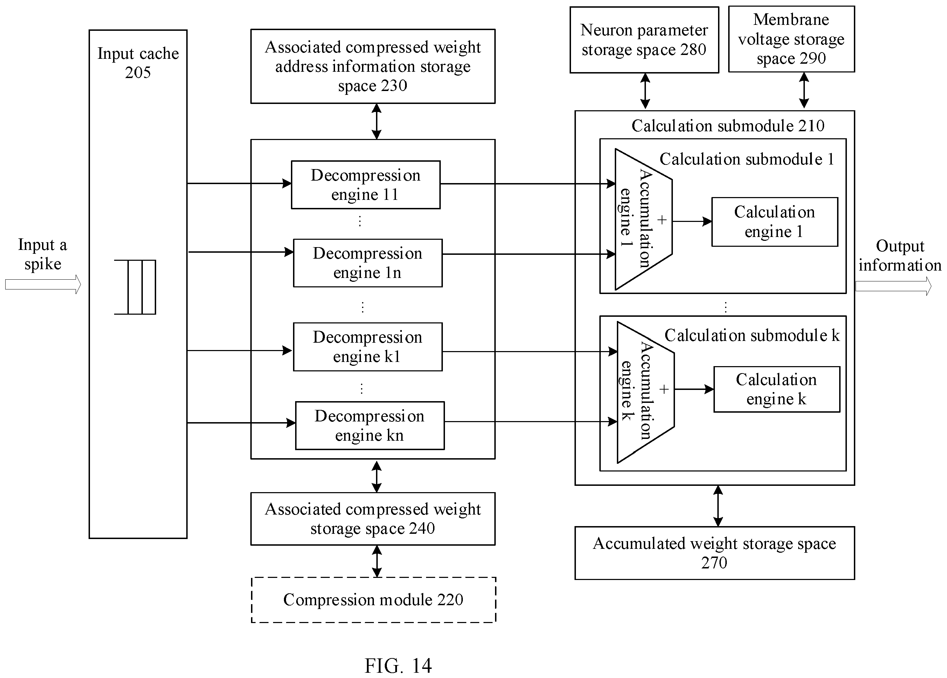

The following uses the spiking neural network shown in FIG. 1 as an example to describe in detail a hardware layer of another spiking neural network provided in an embodiment of this application with reference to FIG. 14. It should be understood that an example in FIG. 14 is merely intended to help a person skilled in the art understand embodiments of this application, instead of limiting embodiments of this application to a specific value or a specific scenario shown in the example. A person skilled in the art can clearly make various equivalent modifications or changes based on the example provided in FIG. 14 below, and such modifications or changes also fall within the scope of embodiments of this application.

FIG. 14 is a schematic diagram of another architecture of a spiking neural network circuit according to an embodiment of this application. As shown in FIG. 14, the circuit may include 1 to kn decompression engines (a decompression engine 11 to a decompression engine kn) and a calculation module 210. In the spiking neural network circuit, the calculation module 210 may include 1 to k calculation submodules, for example, a calculation submodule 1 to a calculation submodule k. Each calculation submodule may include one accumulation engine and one corresponding calculation engine. Optionally, the spiking neural network circuit further includes: an input cache 205, a compression module 220, associated compressed weight address information storage space 230, associated compressed weight storage space 240, accumulated weight storage space 270, neuron parameter storage space 280, and membrane voltage storage space 290.

It should be understood that functions of the input cache 205, the associated compressed weight storage space 240, the associated compressed weight address information storage space 230, the accumulated weight storage space 270, the neuron parameter storage space 280, and the membrane voltage storage space 290 are the same as functions of those in the architecture shown in FIG. 8. For details, refer to the description in FIG. 8. Details are not described herein again.

In the spiking neural network circuit shown in FIG. 14, the calculation module 210 may include the 1 to k calculation submodules. This is different from the spiking neural network circuit in FIG. 8. Each calculation submodule is responsible for separately determining membrane voltages of a plurality of corresponding output neurons based on a plurality of weight values in corresponding weight group. For example, each calculation submodule includes one accumulation engine and one corresponding calculation engine. The accumulation engine is responsible for determining a weight-accumulated value corresponding to an output neuron of a weight group corresponding to the calculation submodule. The calculation engine is responsible for determining, based on the weight-accumulated value output by the accumulation engine, a membrane voltage of the output neuron of the weight group at a current moment.

Specifically, in this embodiment of this application, the grouped semi-structured pruning solution is used for weight compression, so that quantities of weights in groups in all rows are consistent after the pruning. Herein, 1 to k accumulation engines may be used for parallel accumulation. Each accumulation engine is responsible for accumulating weights corresponding to one group of output neurons. Similarly, 1 to k calculation engines may also be used to perform parallel calculation. Each calculation engine is responsible for calculating a membrane voltage of an output neuron based on a weight-accumulated value output by a corresponding accumulation engine. In the decompression engine 01 to the decompression engine kn, because quantities of weights in groups in a row are consistent, the decompression engine 11 to the decompression engine 1n may concurrently disassociate each row of associated compressed weights in a group corresponding to the accumulation engine 1. Similarly, a decompression engine k1 to the decompression engine kn are responsible for disassociating each row of associated compressed weights in a group corresponding to the accumulation engine k, and so on.

For example, the hidden layer of the spiking neural network shown in FIG. 7 is divided into two groups. FIG. 14 may include two accumulation engines (an accumulation engine 1 and an accumulation engine 2), two calculation engines (a calculation engine 1 and a calculation engine 2), decompression engines 11 to 14, and decompression engines 21 to 24. Each of the decompression engines 11 to 14 is responsible for disassociating a corresponding row of associated compressed weights in a first group. The accumulation engine 1 is responsible for accumulating a weight of a neuron in the first group. The calculation engine 1 is responsible for calculating a membrane voltage of the neuron in the first group. Each of the decompression engines 21 to 24 is responsible for disassociating a corresponding row of associated compressed weights in a second group. The accumulation engine 2 is responsible for accumulating a weight of a neuron in the second group. The calculation engine 2 is responsible for calculating a membrane voltage of the neuron in the second group.

For example, the decompression engine 11 is responsible for decompressing an associated compressed weight (for example, 1-W₁₁) stored in the first group in a first row of the associated compressed weight storage space 240, to obtain a weight value W₁₁ corresponding to a number 1 output neuron. A decompression engine 12 is responsible for concurrently decompressing an associated compressed weight (for example, 2-W₂₂) stored in the first group in a second row of the associated compressed weight storage space 240, to obtain a weight value W₂₂ corresponding to a number 2 output neuron. A decompression engine 13 is responsible for concurrently decompressing an associated compressed weight (for example, 1-W₃₁) stored in the first group in a third row of the associated compressed weight storage space 240, to obtain a weight value W₃₁ corresponding to the number 1 output neuron. The decompression engine 14 is responsible for concurrently decompressing an associated compressed weight (for example, 3-W₄₃) stored in the first group in a fourth row of the associated compressed weight storage space 240, to obtain a weight value W₄₃ corresponding to a number 3 output neuron. The accumulation engine 1 is responsible for reading, based on each of the numbers of the number 1 to number 3 neurons, a weight-accumulated value corresponding to the neuron number in accumulated weight storage space 270; accumulating the weight-accumulated value and a weight that corresponds to the neuron number and that is output by each of the four decompression engines (the decompression engine 11 to the decompression engine 14); and then writing an accumulated value into the accumulated weight storage space 270.

For another example, the decompression engine 21 is responsible for decompressing an associated compressed weight (for example, 4-W₁₄) stored in the second group in the first row of the associated compressed weight storage space 240, to obtain a weight value W₁₄ corresponding to a number 4 output neuron. The decompression engine 22 is responsible for concurrently decompressing an associated compressed weight (for example, 6-W₂₆) stored in the second group in the second row of the associated compressed weight storage space 240, to obtain a weight value W₂₆ corresponding to a number 6 output neuron. The decompression engine 23 is responsible for concurrently decompressing an associated compressed weight (for example, 5-W₃₅) stored in the second group in the third row of the associated compressed weight storage space 240, to obtain a weight value W₃₅ corresponding to a number 5 output neuron. The decompression engine 24 is responsible for concurrently decompressing an associated compressed weight (for example, 4-W₄₄) stored in the second group in the fourth row of the associated compressed weight storage space 240, to obtain a weight value W₄₄ corresponding to the number 4 output neuron. The accumulation engine 1 may concurrently work with the accumulation engine 1, and is responsible for reading, based on each of the numbers of the number 4 to number 6 neurons, a weight-accumulated value corresponding to the neuron number in accumulated weight storage space 270; accumulating the weight-accumulated value and a weight that corresponds to the neuron number and that is output by each of the four decompression engines (the decompression engine 21 to the decompression engine 24); and then writing an accumulated value into the accumulated weight storage space 270.

It should be understood that the foregoing description is provided by using an example in which a layer of the spiking neural network is divided into two groups. Actually, a quantity of accumulation engines and a quantity of calculation engines included in the chip shown in FIG. 14 are determined based on a quantity of groups into which a layer is divided. Certainly, n neurons at a specific layer may be alternatively divided into n groups, and each neuron is one group. In this way, n accumulation engines and n calculation engines are needed. Each accumulation engine is responsible for weight accumulation of one neuron, and each calculation engine is responsible for calculating a membrane voltage of one neuron.

In the spiking neural network chip, the grouped semi-structured pruning solution is used for weight compression, so that quantities of weights in groups in all rows are consistent after the pruning. A plurality of decompression engines can be used to perform parallel disassociation, a plurality of accumulation engines can be used to perform parallel accumulation, and a plurality of calculation engines can be used to perform parallel calculation. In this way, a computing speed of the spiking neural network chip is further increased, to improve calculation efficiency and reduce a delay and power consumption.

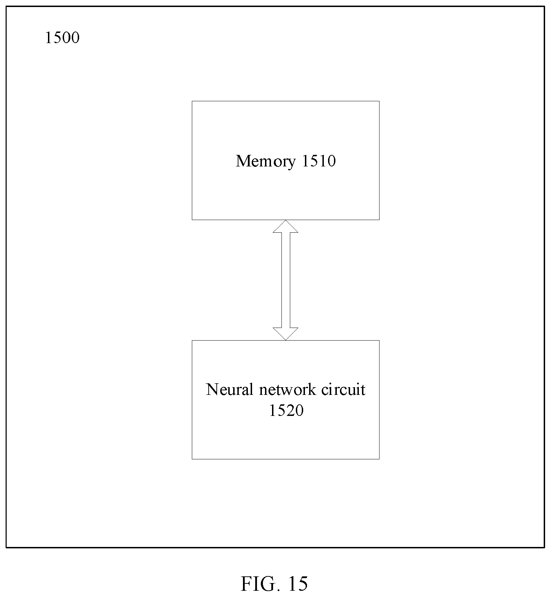

FIG. 15 is a schematic block diagram of a spiking neural network system 1500 according to an embodiment of this application. As shown in FIG. 15, the spiking neural network system 1500 may include a memory 1510 and a neural network circuit 1520.

The memory 1510 may be configured to store a plurality of compressed weight values. For example, the memory 1510 may correspond to the foregoing associated compressed weight storage space 240. Optionally, the memory 1510 may be further configured to store information about an input neuron. For example, the memory 1510 may correspond to the foregoing input cache 205.

The neural network circuit 1520 may be implemented in a plurality of manners. This is not limited in this embodiment of this application. For example, the neural network circuit 1520 may be the spiking neural network circuit shown in FIG. 8. For another example, the neural network circuit 1520 may be alternatively the spiking neural network circuit shown in FIG. 14. For details, refer to the foregoing description of the spiking neural network circuit. Details are not described herein again.

It should be understood that, in embodiments of this application, sequence numbers of the foregoing processes do not mean an execution order. The execution order of the processes should be determined based on functions and internal logic of the processes, and should not constitute any limitation on implementation processes of embodiments of this application.

A person of ordinary skill in the art may be aware that, in combination with examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented through some interfaces. Indirect couplings or communication connections between apparatuses or units may be implemented in electrical, mechanical, or other forms.

The units described as separate parts may or may not be physically separate, and parts displayed as units may or may not be physical units, and may be at one location, or may be distributed on a plurality of network elements. Some or all of the units may be selected according to actual requirements to achieve the objectives of the solutions of embodiments.

In addition, function units in embodiments of this application may be integrated into one processing unit, or each of the units may exist alone physically, or two or more units are integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for indicating a computer device (which may be a personal computer, a server, or a network device) to perform all or a part of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing description is merely specific implementations of this application, but is not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A spiking neural network circuit, comprising:
a plurality of decompression modules, configured to separately obtain a plurality of weight values in a compressed weight matrix and identifiers of a plurality of corresponding output neurons based on information about a plurality of input neurons, wherein each of the plurality of decompression modules is configured to concurrently obtain weight values with a same row number in the compressed weight matrix and identifiers of a plurality of output neurons corresponding to the weight values with the same row number, each row of the compressed weight matrix has a same quantity of non-zero weight values, and each row of weight values corresponds to one input neuron; and
a calculation module, configured to separately determine corresponding membrane voltages of the plurality of output neurons based on the plurality of weight values.

2. The circuit according to claim 1, wherein the input neurons in the spiking neural network circuit comprise a first input neuron and a second input neuron, and the plurality of decompression modules comprise a first decompression module and a second decompression module;
the first decompression module is configured to obtain a first row of weight values corresponding to the first input neuron in the compressed weight matrix and identifiers of one or more output neurons respectively corresponding to the first row of weight values; and
the second decompression module is configured to obtain a second row of weight values corresponding to the second input neuron in the compressed weight matrix and identifiers of one or more output neurons respectively corresponding to the second row of weight values.

3. The circuit according to claim 1 or 2, further comprising:
a compression module, configured to prune some weight values in an initial weight matrix according to a pruning ratio, to obtain the compressed weight matrix.

4. The circuit according to any one of claims 1 to 3, wherein the compressed weight matrix comprises a plurality of weight groups, and each row in each of the plurality of weight groups has a same quantity of non-zero weight values.

5. The circuit according to claim 4, wherein the calculation module comprises a plurality of calculation submodules, and each of the plurality of calculation submodules is configured to concurrently calculate a membrane voltage of an output neuron of one weight group.

6. The circuit according to claim 5, wherein the plurality of calculation submodules comprise a first calculation submodule and a second calculation sub module, the first calculation submodule comprises a first accumulation engine and a first calculation engine, and the second calculation submodule comprises a second accumulation engine and a second calculation engine;
the first accumulation engine is configured to determine a weight-accumulated value corresponding to an output neuron of a first weight group corresponding to the first calculation submodule;
the first calculation engine is configured to determine a membrane voltage of the output neuron of the first weight group at a current moment based on the weight-accumulated value output by the first accumulation engine;
the second accumulation engine is configured to determine a weight-accumulated value corresponding to an output neuron of a second weight group corresponding to the second calculation submodule; and
the second calculation engine is configured to determine a membrane voltage of the output neuron of the second weight group at a current moment based on the weight-accumulated value output by the second accumulation engine.

7. A spiking neural network-based calculation method, comprising:
separately obtaining a plurality of weight values in a compressed weight matrix and identifiers of a plurality of corresponding output neurons based on information about a plurality of input neurons, wherein the plurality of weight values comprise weight values that have a same row number in the compressed weight matrix and that are concurrently obtained, the identifiers of the plurality of output neurons comprise identifiers that are of the plurality of output neurons corresponding to the weight values with the same row number and that are concurrently obtained, each row of the compressed weight matrix has a same quantity of non-zero weight values, and each row of weight values corresponds to one input neuron; and
separately determining corresponding membrane voltages of the plurality of output neurons based on the plurality of weight values.

8. The method according to claim 7, wherein the input neurons of a spiking neural network comprise a first input neuron and a second input neuron; and
the separately obtaining a plurality of weight values in a compressed weight matrix and identifiers of a plurality of corresponding output neurons based on information about a plurality of input neurons comprises:
obtaining a first row of weight values corresponding to the first input neuron in the compressed weight matrix and identifiers of one or more output neurons respectively corresponding to the first row of weight values; and
obtaining a second row of weight values corresponding to the second input neuron in the compressed weight matrix and identifiers of one or more output neurons respectively corresponding to the second row of weight values.

9. The method according to claim 7 or 8, wherein the method further comprises:
pruning some weight values in an initial weight matrix according to a pruning ratio, to obtain the compressed weight matrix.

10. The method according to any one of claims 7 to 9, wherein the compressed weight matrix comprises a plurality of weight groups, and each row of each of the plurality of weight groups has a same quantity of non-zero weight values.

11. The method according to claim 10, wherein the separately determining corresponding membrane voltages of the plurality of output neurons based on the plurality of weight values comprises:
separately determining the corresponding membrane voltages of the plurality of output neurons concurrently based on the plurality of weight values in each weight group.

12. The method according to claim 11, wherein the plurality of weight groups comprise a first weight group and a second weight group; and
the separately determining the corresponding membrane voltages of the plurality of output neurons concurrently based on the plurality of weight values in each weight group comprises:
determining a weight-accumulated value corresponding to an output neuron of the first weight group, determining a membrane voltage of the output neuron of the first weight group at a current moment based on the weight-accumulated value corresponding to the output neuron of the first weight group, determining a weight-accumulated value corresponding to an output neuron of the second weight group, and determining a membrane voltage of the output neuron of the second weight group at a current moment based on the weight-accumulated value corresponding to the output neuron of the second weight group.

13. A spiking neural network system, comprising a memory and the spiking neural network circuit according to any one of claims 1 to 6, wherein the memory is configured to store a plurality of compressed weight values.
